# EUROPÄISCHE PATENTSCHRIFT

(11) **EP 2 641 823 B1**
(45) Veröffentlichungstag und Bekanntmachung des Hinweises auf die Patenterteilung: **03.08.2016**
(21) Anmeldenummer: 13001168.7
(22) Anmeldetag: 08.03.2013
(51) Int. Cl.: B62M 9/126

(54) **Antriebsanordnung für ein Fahrrad mit hoher Zähnezahldifferenz zwischen größtem und kleinstem hinteren Kettenritzel**
Drive assembly for a bicycle with high tooth ratio between largest and smallest rear chain sprocket
Agencement d'entraînement pour une bicyclette doté d'une grande différence de nombre de dents entre le plus grand et le plus petit pignon arrière

(30) Priorität: 20.03.2012 DE 102012204452
(43) Veröffentlichungstag der Anmeldung: 25.09.2013
(73) Patentinhaber: SRAM Deutschland GmbH, 97424 Schweinfurt (DE)
(72) Erfinder: Böhm, Robert, 97453 Mainberg (DE)
(74) Vertreter: RLTG

(56) Entgegenhaltungen:
- EP-A1- 2 106 995
- EP-A2- 2 022 713
- FR-A1- 2 496 587
- FR-A1- 2 541 225
- FR-A1- 2 610 062
- US-A- 5 540 118

## Beschreibung

Die vorliegende Erfindung betrifft eine Antriebsanordnung für ein Fahrrad gemäß dem Oberbegriff von Anspruch 1.

Eine gattungsgemäße Antriebsanordnung ist aus der FR 2 541 225 A bekannt.

Eine weitere, jedoch wegen ihrer Abstände der Kettenführungsrollenachsen von der Spann-Schwenkachse nicht gattungsgemäße Antriebsanordnung ist beispielsweise aus der US 3,748,916A bekannt. Diese bekannte Antriebsanordnung schlägt eine hintere Kettenführung vor, bei welcher eine ritzelnähere Kettenführungsrolle - das ist im Sinne der vorliegenden Anmeldung jene Kettenführungsrolle, von welcher die sich in Antriebsrichtung drehende Antriebskette zuletzt abläuft, bevor sie auf das aktive hintere Kettenritzel aufläuft - bei Betrachtung der bekannten Antriebsanordnung in Richtung der Ritzelachse tangential zu den bezogen auf das aktive Ritzel nächstgrößere inaktive Ritzel angeordnet wird, um einen möglichst vorteilhaften Schaltvorgang von dem aktiven Ritzel auf das nächstgrößere inaktive Ritzel bewirken zu können.

Ziel der vorliegenden Erfindung ist es dagegen, eine Antriebsanordnung für ein Fahrrad anzugeben, bei welcher die Antriebskette zwischen hinteren Kettenritzeln geschaltet werden kann, welche zwischen ihrem größten und ihrem kleinsten Ritzel eine verhältnismäßig große Differenz der Zähneanzahl aufweisen.

Für einen sicheren und reproduzierbaren Schaltvorgang an den hinteren Kettenritzeln, also für ein Umlegen der Antriebskette von einem aktiven Kettenritzel, welches aktuell mit der Antriebskette in kämmendem Eingriff ist, auf ein derzeit inaktives, aber zukünftig aktives Ritzel, ist es vorteilhaft, wenn die freie Kettenstrecke zwischen der ritzelnäheren Kettenführungsrolle und dem hinteren Kettenritzel nicht zu groß ist, da andernfalls eine axiale Bewegung des hinteren Umwerfers parallel zur gemeinsamen Ritzelachse der hinteren Kettenritzel eher zu einer Biegung der Kette als zu deren Umlegen von einem aktiven Ritzel auf ein noch inaktives benachbartes Ritzel führt. Ebenso darf diese freie Kettenlänge nicht zu kurz sein, da ansonsten die üblicherweise als Rollenkette mit Innen- und Aüßenlaschen ausgebildete Antriebskette wie ein starrer Festkörper wirkt und sich der hintere Umwerfer mit dem freien Kettenstück zwischen der ritzelnäheren Kettenführungsrolle und dem Kettenritzel verklemmt, anstatt die Kette auf das benachbarte noch inaktive Kettenritzel umzulegen.

Dabei ist insbesondere ein Schaltvorgang, bei welchem die Antriebskette von einem aktiven Ritzel auf ein durchmessergrößeres inaktives Kettenritzel umgelegt werden soll, problematisch, da hier die Kette vom aktuellen aktiven Ritzel ausgehend auf das durchmessergrößere inaktive Kettenritzel mit größerer Zähnezahl steigen muss.

Es ist daher Aufgabe der vorliegenden Erfindung, eine Antriebsanordnung der eingangs genannten Art anzugeben, bei welcher die freie Kettenlänge zwischen der ritzelnäheren Kettenführungsrolle der Spanneinrichtung des Spann-Umwerfers der hinteren Kettenführung, von welcher die bestimmungsgemäß in Antriebsdrehrichtung umlaufende Antriebskette abläuft, und dem aktiven Ritzel, welches aktuell mit der Antriebskette in kämmendem Eingriff ist, im Wesentlichen für alle Keftenritzel konstant ist.

Dann nämlich, wenn diese freie Kettenflänge für alle Kettenritzel als aktive Kettenritzel konstant ist, wird für die gesamte Anordnung aus hinteren Kettenritzeln ein im Wesentlichen gleiches Schaltverhalten bereitgestellt, unabhängig davon, welches der Ritzel gerade aktiv ist.

Der Fachmann kann dann durch entsprechende Anordnung der hinteren Kettenführung am Fahrrad und durch entsprechende Dimensionierung derselben diese freie Kettenlänge so bestimmen, dass sie für die jeweils gewählte konkrete Antriebsanordnung optimal ist, wohlwissend, dass die einmal gewählte optimale freie Kettenlänge zwischen der ritzelnäheren Kettenführungsrölle und dem aktuellen Ritzel für alle hinteren Kettenritzel im Wesentichen gleich groß und somit ebenfalls optimal sein wird.

Diese Aufgabe wird erfindungsgemäß gelöst durch eine gattungsgemäße Antriebsanordnung mit allen Merkmalen des Anspruchs 1.

Durch das eingangs bereits genannte Parallelogramm-Viergelenk, welches den Anbringungsteil der hinteren Kettenführung mit dem Bewegungsteil derselben verbindet, wird das Bewegungsteil und damit die am Bewegungsteil wie oben dargelegt angelenkte Spanneinrichtung im Wesentlichen längs einer zur gemeinsamen Ritzelachse parallelen Trajektorie verlagert, wenn die hintere Kettenführung aufgrund eines vom jeweiligen Fahrradfahrer gewünschten Schaltvorgangs relativ zu den hinteren Ritzeln bewegt wird.

Zwar ist aufgrund des als Bewegungsübertragungsgestänge wischen Anbringungsteil und Bewegungsteil gewählten Parallelogramm-Viergelenks über einen bestimmten axialen Bewegungsbereich keine rein axiale Trajektorie möglich, so dass das Bewegungsteil immer auch einen unvermeidlichen radialen Bewegungsanteil aufweisen wird, jedoch überwiegt der axiale Bewegungsanteil der Trajektorie des Bewegungsteils bei Relativverstellung des Spann-Umwerfers relativ zu den hinteren Kettenritzeln aufgrund der gewählten Orientierung der Gelenkachsen des Parallelogramm-Viergelenks.

Dabei ist es überraschend, dass mit einem Bewegungsteil mit daran angelenkter Spanneinrichtung zur Spannung der Antriebskette, welche sich aufgrund des zwischenangeordneten Parallelogramm-Viergelenks relativ zu dem kettenritzelfesten Anbringungsteil der hinteren Kettenführung hauptsächlich parallel zur Ritzelächse bewegen lässt, selbst bei hinteren Kettenritzeln mit hoher Differenz der Zähnezahl zwischen größtem und kleinstem Ritzel ein Längenausgleich derart realisieren lässt, dass die freie Kettenlänge zwischen der ritzelnäheren Kettenführungsrolle und dem aktiven Ritzel über alle hinteren Kettenritzel im Wesentlichen konstant ist. Die Konstanz der freien Kettenlänge wird dabei fast ausschließlich durch eine Schwenkbewegung der Spanneinrichtung bewirkt.

Dies wird zum einen dadurch erreicht, dass der konstante Abstand der ritzelnäheren Kettenführungsrollenachse von der Spann-Schwenkachse kürzer ist als der konstante Abstand der ritzelferneren Kettenführungsrollenachse von der Spann-Schwenkachse. Der Abstand der ritzelnäheren Kettenführungsrollenachse von der Spann-Schwenkachse bestimmt das Stellvermögen der hinteren Kettenführung, da die ritzelnähere Kettenführungsrollenachse jeweils so nahe an das jeweils aktive hintere Kettenritzel heranzuführen ist, dass die gewünschte konstante frei Kettenlänge erreicht ist.

Der konstante Abstand der ritzelferneren Kettenführungsrollenachse von der Spann-Schwenkachse ist ein Maß für die hintere Kettenführung, Kettenlänge in der hinteren Kettenführung aufzunehmen, gleichsam zu "speichern". Dieses Kettenaufnahmevermögen ist Folge des Abstands der Kettenführungsrollen voneinander und ihrer Verschwenkbarkeit um die Spann-Schwenkächse. Durch die Verschwenkung der Spanneinrichtung um die SpannSchwenkachse ändert sich außerdem die Umschlingung der ritzelferneren Kettenführungsrolle durch die Antriebskette, so dass auch die ritzelfernere Kettenführungsrolle zu dem hier diskutierten Kettenaufnahmevermögen beiträgt.

Dadurch, dass der zweite Abstand größer gewählt ist als der erste Abstand, ist die Grundvoraussetzung geschaffen, dass die hintere Kettenführung ausreichend Kettenlänge unter Beibehaltung der Spannung der Antriebskette aufnehmen kann, wenn das zahnärmste, durchmesserkleinste hintere Kettenritzel, das aktive Ritzel ist. Außerdem ist somit sichergestellt, dass ausreichend Kettenlänge von der hinteren Kettenführung freigegeben werden kann, wenn das zahnreichste, durchmessergrößte hintere Kettenritzel als aktives Kettenritzel ausgewählt ist.

Unter vereinfachender Annahme eines etwa konstanten Umschlingungswinkels der hinteren Kettenritzel durch die Antriebskette entspricht der Unterschied an in kämmendem Eingriff mit einem Ritzel befindlicher Kettenlänge etwa der Differenz der Radien von größtem und kleinstem Ritzel multipliziert mit dem Umschlingungswinkel im Bogenmaß.

Dabei ist eine sichere Kettenführung zwischen den beiden Kettenführungsrollen bei gleichzeitig ausreichendem Aufnahmevermögen der hinteren Kettenführung zur Aufnahme von Kettenlängen dann gegeben, wenn die oben bezeichneten Verbindungsebenen zwischen der Spann-Schwenkachse und den einzelnen Kettenführungsrollenachsen einen Winkel im Bereich von 55 bis 60° einschließen. Bei kleineren Winkeln droht eine Kollision des der Kettenführung zulaufenden Kettentrums mit der zwischen den Kettenführungsrollen vorhandenen Kettenstrecke, wenn die Kette auf durchmesserkleinere (zahnärmere) Kettenritzel umgelegt wird.

Bei größeren Winkeln droht dann, wenn die aktiven Kettenritzel immer durchmessergrößer, also zahnreicher, werden, eine unzureichende Führung der Antriebskette im Bereich der Spanneinrichtung, da bei immer durchmessergrößeren aktiven Kettenritzeln immer weniger Kettenlänge in der Spanneinrichtung vorhanden ist und somit die hintere Kettenführung ihre ureigenste Aufgabe der Führung der Kette an einem immer kürzer werdenden Kettenabschnitt ausführen muss, denn mit zunehmend durchmessergrößeren aktiven Kettenritzeln nimmt der Umschlingungswinkel ab, mit welchem die Antriebskette die Kettenführungsrollen, insbesondere die ritzelfernere Kettenführungsrolle, umgibt. Je größer dieser Umschlingungswinkel der Kettenführungsrollen jedoch ist, desto besser können diese Kraft auf die Antriebskette übertragen und die Antriebskette "führen".

Die besten Ergebnisse hinsichtlich Zähnezahlunterschied zwischen größtem und kleinstem Ritzel und hinsichtlich der möglichen Anzahl an Ritzeln an der gemeinsamen Ritzelachse wurden in einem Winkelbereicht von 55° bis 60° erreicht, den die genannten Verbindungsebenen miteinander einschließen.

Um zu verhindern, dass gleichsam pathologische Zustände an der hinteren Kettenführung erreicht werden, also dass etwa die Kettenführungsrollenachse der ritzelferneren Kettenführungsrolle in bestimmten Schaustellungen der Antriebsanordnung mit dem Boden zu kollidieren droht, auf dem ein die hier diskutierte Antriebsanordnung tragendes Fahrrad abrollt, sollte vorzugsweise darauf geachtet werden, dass der zweite Abstand der ritzelferneren Kettenführungsrollenachse von der Spann-Schwenkachse weniger als das 2,5-fache des ersten Abstands der ritzelnäheren Kettenführungsrollenachse von der Spann-Schwenkachse beträgt. Eine noch größere Bodenfreiheit erhält man, wenn der zweite Abstand nicht mehr als das 2,3-fache des ersten Abstands beträgt.

Ein ausreichendes Kettenspeichervermögen wird dagegen erhalten, wenn der zweite Abstand mehr als das 1,3-fache des ersten Abstands beträgt, wobei das Kettenspeichervermögen noch höher ist, wenn der zweite Abstand mehr als das 1,6-fache des ersten Abstands beträgt, was eine größere Anzahl an hinteren Kettenritzeln oder/und einen höheren Zähnezahlunterschied zwischen größtem und kleinstem hinteren Kettenritzel ermöglicht.

Einen optimalen Kompromiss zwischen Kettenspeichervermögen einerseits und Bodenfreiheit andererseits erhält man, wenn der zweite Abstand mehr als das 1,8-fache, jedoch nicht mehr als das Doppelte des ersten Abstands beträgt.

Zur Beschreibung der Anordnung der Spanneinrichtung innerhalb der Antriebsanordnung ist es vorteilhaft, eine imaginäre Abstandsgerade heranzuziehen, welche die Ritzelachse und die Kettenradachse verbindet. Zu der ritzel- und kettenseitigen Abstandsgeraden soll als spanneinrichtungsseitige Bezugsgröße eine Spann-Bezugsebene hinzutreten, welche die SpannSchwenkachse enthält und zu der Abstandsgeraden orthogonal ist.

Einen vorteilhaft großen, jedoch nicht zu großen Umschlingungswinkel der hintern Kettenritzel mit der Antriebskette, also eine vorteilhafte Eingriffslänge der Antriebskette mit dem jeweiligen aktiven Ritzel, kann man dann dadurch erhalten, dass man die hintere Kettenführung derart anordnet, dass die Spann-Bezugsebene die Abstandsgerade in einem Bereich zwischen der Ritzelachse und der Kettenradachse schneidet.

Einen vorteilhaften Umschlingungswinkel von aktiven Kettenritzeln durch die Antriebskette von mehr als 90°, jedoch weniger als 180°, vorzugsweise im Bereich von zwischen 120° und 150°, besonders bevorzugt in einem Bereich von 130° bis 150°, kann man mit einer Antriebsanordnung der oben genannten Bauart dann erhalten, wenn der Schnittpunkt der Abstandsgerade mit der Spann-Bezugsebene von der Ritzelachse nicht mehr als 16 %, bevorzugt nicht mehr als 12 %, besonders bevorzugt nicht mehr als 10 % und nicht weniger als 6 %, bevorzugt nicht mehr als 7 % und besonders bevorzugt nicht mehr als 8 % des Abstands zwischen der Ritzelachse und der Kettenradachse entfernt ist.

Die Spann-Schwenkachse, welche üblicherweise unterhalb der Abstandsgeraden zwischen der Ritzelachse und der Kettenradachse gelegen ist, ist fest an dem Bewegungsteil angeordnet, so dass die Spann-Schwenkachse bei Relativbewegung des Spann-Umwerfers relativ zu den hinteren Kettenritzeln die gleiche Trajektorie aufweist, wie das Bewegungsteil selbst. Da diese Trajektorie im Wesentlichen - abgesehen von einer geringfügigen radialen Bewegung - hauptsächlich parallel zu der Ritzelachse verläuft, während die hinteren Kettenritzel einen Konus als Einhüllende Geometrie aufweisen, ist es vorteilhaft, wenn bei Betrachtung der Antriebsanordnung in Richtung der gemeinsamen Ritzelachse wenigstens eine Gelenkachse, vorzugsweise alle Gelenkachsen, des Parallelogramm-Viergelenks zwischen der Ritzelachse einerseits und sowohl der Spann-Schwenkachse als auch der Kettentadachse andererseits verläuft bzw. verlaufen. Durch diese Anordnung der wenigstens einen Gelenkachse kann erreicht werden, dass das Anbringungsteil der hinteren Kettenführung an der Ritzelachse selbst festgelegt werden kann. Damit kann ein ohnehin am Fahrrad bzw. an der Antriebsanordnung vorgesehenes Ritzelachsenbauteil auch zur Aufnahme und Anbringung des Anbringungsteils genutzt werden, was die Anzahl an zur Realisierung der vorliegend diskutierten Antriebsanordnung benötigten Bauteilen reduziert.

Um sicherzustellen, dass stets eine ausreichend große Kettenlänge in der hinteren Kettenführung, insbesondere in der Spanneinrichtung derselben, aufgenommen ist, um so ein ausreichendes Kettenführungsvermögen der hinteren Kettenführung bereitzustellen, kann vorgesehen sein, dass der Abstand der Kettenführungsrollenachsen größer gewählt ist als das 1,5-flache, bevorzugt größer gewählt ist als das 1,8-fache der Summe der Fußkreisradien der beiden Kettenführungsrollen.

Als Fußkreisradius sei dabei die Strecke von einer Kettenführungsrollenachse zu einem Grund einer Ausnehmung zwischen zwei aufeinander unmittelbar folgenden Zähnen derselben Kettenführungsrolle herangezogen.

Die Kettenführungsrollenachse der ritzelnäheren Kettenführungsrolle soll bei einem Verschwenken der Spanneinrichtung um die Spann-Schwenkachse vorzugsweise einen möglichst großen radialen Bewegungsanteil bezogen auf die Ritzelachse und einen möglichst geringen Umfangsbewegungsanteil aufweisen, um mit einer möglichst geringen Relativbewegung relativ zu den hinteren Kettenritzeln und einem möglichst geringen Abstand zwischen der Spann-Schwenkachse und der ritzelnäheren Kettenführungsrollenachse eine möglichst große Stellbewegung unter Berücksichtigung der Durchmnesser änderungen benachbarter Kettenritzel zu bewirken. Eine Umfangsbewegung kann dabei keinen oder nur einen untergeordneten Beitrag zur Einstellung der optimalen freien Kettenlänge zwischen der ritzelnäheren Kettenführungsrolle und dem jeweils aktiven Ritzel bei Änderung des Durchmessers des aktiven Ritzels leisten.

Hierfür ist es vorteilhaft, wenn die Kettenlänge und die Abstände der Kettenführungsrollenachsen von der Spann-Schwenkachse derart gewählt sind, dass die Spanneinrichtung zwischen ihren Extremstellungen, in welchen die jeweils axial ganz außen liegenden Ritzel als aktive Ritzel ausgewählt sind, um 100° bis 140°, bevorzugt um 110° bis 130°, besonders bevorzugt um 120° bis 125° verschwenkt.

Vorteilhafterweise ist gemäß einer Weiterbildung der vorliegenden Erfindung die Antriebsanordnung derart angeordnet, dass die Kettenführungsrollenachse der ritzelnäheren Kettenführungsrolle in ihren beiden Extremstellungen, d. h. dann, wenn einmal das durchmesserkleinste Kettenritzel aktives Kettenritzel ist und ein andermal das durchmessergrößte Kettenritzel aktives Kettenritzel ist, in einem von der Kettenritzelachse ausgehenden und in einer zur Kettenritzelachse orthogonalen Ebene betrachteten Sektor gelegen ist, welcher sich über einen Winkelbereich um die Ritzelachse erstreckt, der nicht größer als 15°, vorzugsweise nicht größer als 10°, besonders bevorzugt nicht größer als 5° ist. Durch diese Ausbildung der Antriebsanordnung kann erreicht werden, dass eine besonders große Anzahl an hinteren Kettenritzeln oder/und ein großer Zähneanzahlunterschied zwischen größtem und kleinstem Ritzel mit der vorliegenden Antriebsanordnung immer noch zuverlässig geschalten werden kann.

Um sicherstellen zu können, dass die Bewegungstrajektorie der Spann-Schwenkachse bei der Schaltbewegung des Spann-Umwerfers relativ zur Mehrzahl der hinteren Kettenritzel hauptsächlich eine zur Ritzelachse parallele Trajektorie aufweist, ohne dass die zwischen der ritzelnäheren Kettenführungsrolle und dem jeweils aktiven Ritzel bestehende freie Kettenlänge zu groß wird, kann vorgesehen sein, dass die Länge der Parallelogramm-Lenker des Parallelogramm-Viergelenks mehr als die Hälfte der freien Kettenlänge zwischen der ritzelnäheren Kettenführungsrolle und dem jeweils aktiven Ritzel und weniger als diese freie Kettenlänge beträgt.

Die vorliegende Antriebsanordnung gestattet insbesondere, jeglichen Schaltvorgang, also jegliche Änderung der Unter- oder Übersetzung zwischen vorderem Kettenrad und aktivem hinteren Kettenritzel ausschließlich an den hinteren Kettenritzeln zu realisieren, so dass die vorliegende Antriebsanordnung nur genau ein vorderes Kettenrad umfassen kann.

Insbesondere eignet sich die hier diskutierte Konstruktion für Antriebsariordnungen, welche mehr als neun, sogar mehr als zehn oder insbesondere genau elf koaxiale hintere Ritzel umfasst, zwischen welchen die Antriebskette zur Änderung der Antriebsübersetzung durch die hintere Kettenführung umgelegt werden kann.

Dabei beträgt erfindungsgemäß die Differenz der Zähneanzahl zwischen dem zahnreichsten hinteren Ritzel und dem zahnärmsten hinteren Ritzel spielend mehr als 25 Zähne. Problemlos sind auch Zähnezahlunterschiede von mehr als 28 Zähnen zwischen dem zahnreichsten und dem zahnärmsten hinteren Ritzel realisierbar. Auch Zähnezahlunterschiede von mehr als 30 Zähnen sind möglich. Am stärksten bevorzugt ist eine Differenz der Zähneanzahl zwischen dem zahnreichsten und dem zahnärmsten hinteren Ritzel von genau 32 Zähnen, was die Realisierung sowohl von Unter- als auch von Übersetzungen zwischen Kettenrad und aktivem Kettenritzel gestattet, so dass eine derartige Antriebsanordnung sowohl für Bergauffahrt, für Geradeausfahrt als auch für schnelle Bergabfahrt nutzbar ist.

Die vorliegende Erfindung wird nachfolgend anhand der beiliegenden Figuren näher erläutert. Es stellt dar:
- Fig. 1: eine Aufrissansicht einer erfindungsgemäßen Ausführungsform einer Antriebsanordnung für ein Fahrrad der vorliegenden Anmeldung bei Betrachtung in Richtung der Ritzelachse,
- Fig. 2: die Ausführungsform von Fig. 1 in perspektivischer Ansicht,
- Fig. 3: eine vereinfachte Darstellung der Ausführungsform der Fig. 1 und 2, wenn das durchmessergrößte Ritzel als aktives Ritzel gewählt ist,
- Fig. 4: die vereinfachte Aufrissansicht von Fig. 3 mit dem kleinsten Ritzel als aktives Ritzel,
- Fig. 5: ein vergrößerter Ausschnitt von Fig. 4, welcher die Anordnung koaxialer Hinterradritzel mit dem durchmesserkleinsten Ritzel als aktiven Ritzel und die Spanneinrichtung zeigt, wobei zusätztich die Stellung der Spanneinrichtung für den Fall eingezeichnet ist, dass, wie in Fig. 3, das durchmessergrößte Ritzel als aktives Ritzel ausgewählt ist,
- Fig. 6: eine vergrößerte Darstellung der Vorderseite der hinteren Kettehführung, wie sie in Fig. 1 dargestellt ist, und
- Fig. 7: eine Darstellung der Rückseite der hinteren Kettenführung von Fig. 6.

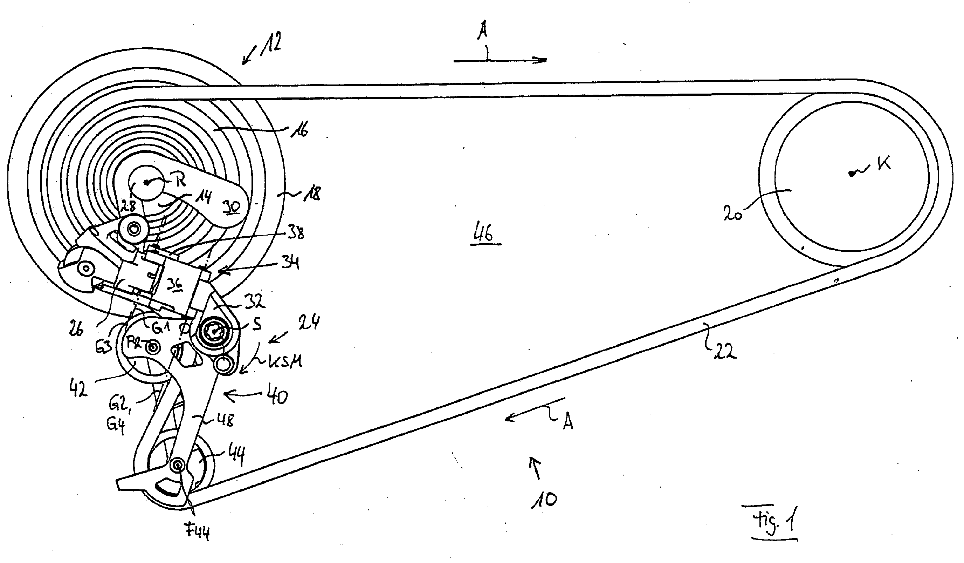

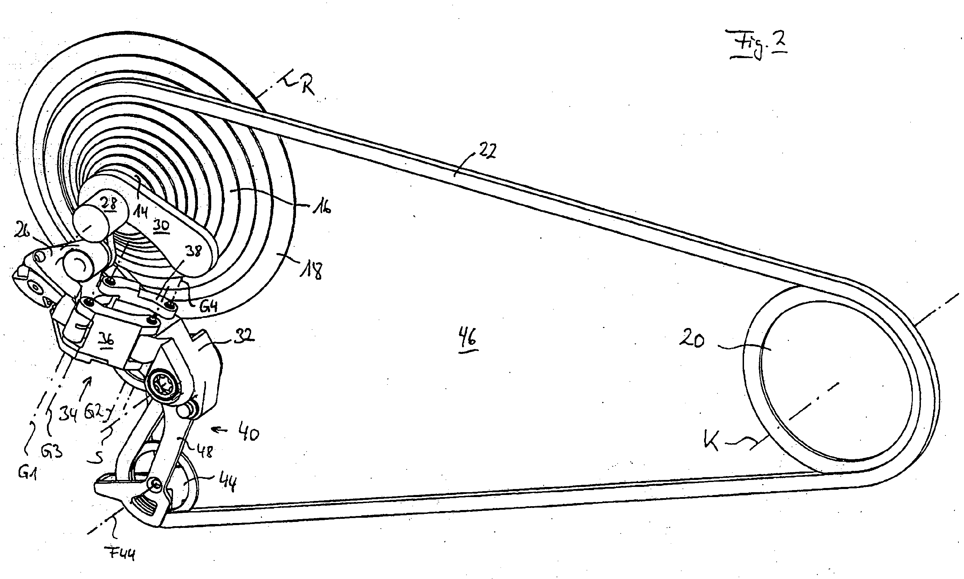

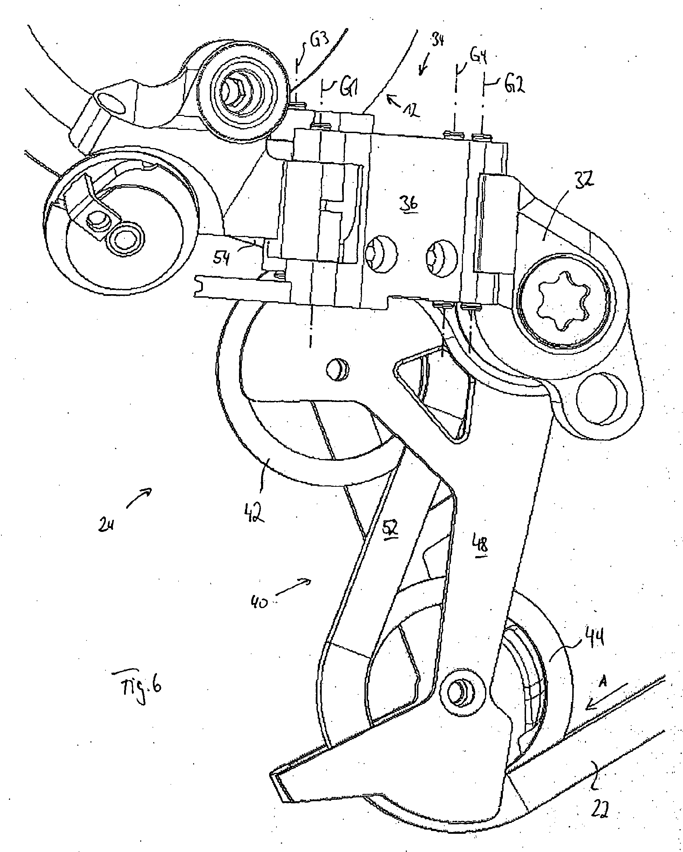

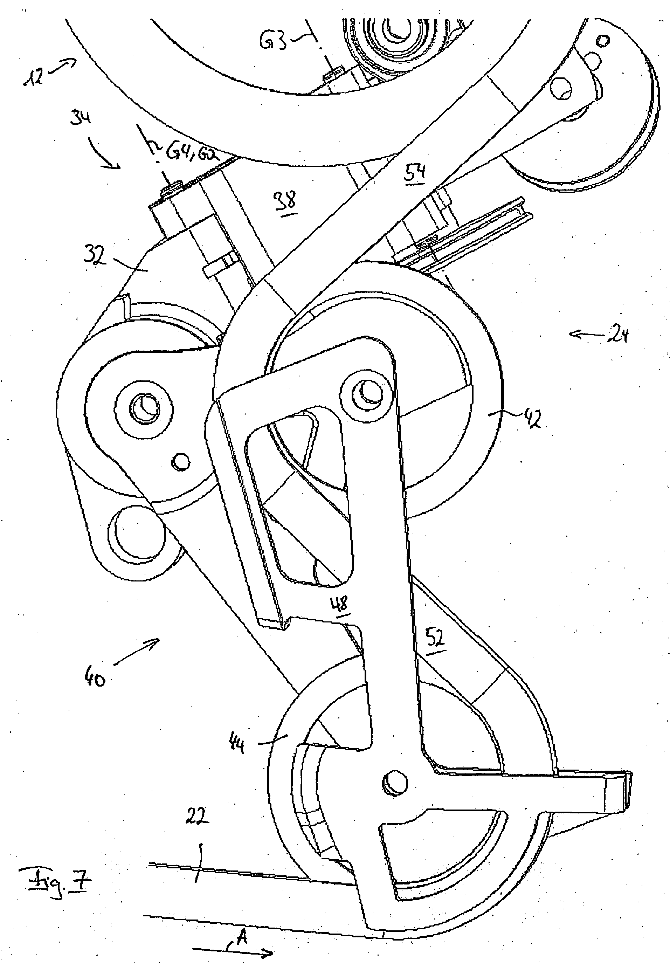

Nachfolgend wird zur Erläuterung der vorliegenden Erfindung auf die Fig. 1 bis 7 gemeinsam Bezug genommen. Sofern sich an bestimmten Beschreibungsstellen einzelne Figuren besonders zur Darstellung der beschriebenen technischen Merkmale eignen, wird dies gesondert hervorgehoben werden.

In den Figuren ist eine erfindungsgemäße Ausführungsform einer Antriebsanordnung der vorliegenden Anmeldung allgemein mit 10 bezeichnet.

Die Antriebsanordnung 10 umfasst eine Anordnung 12 bezüglich einer zur Zeichenebene der Fig. 1 orthogonalen Ritzelachse R koaxialer Ritzel, von welchen aus Gründen der besseren Übersicht lediglich das durchmesserkleinste Ritzel mit dem Bezugszeichen 14, das in Fig. 1 ausgewählte aktive Ritzel mit dem Bezugszeichen 16 und das durchmessergrößte Ritzel mit dem Bezugszeichen 18 versehen ist. In dem in den Figuren dargestellten vorteilhaften Beispiel weist die Anordnung 12 der koaxialen hinteren Ritzel genau elf einzelne Ritzel auf, von welchen jedes einzelne sich hinsichtlich Durchmesser und Zähnezahl von allen übrigen Ritzeln der Anordnung 12 unterscheidet. Die Anzahl an Ritzeln der Anordnung 12 kann jedoch von elf verschieden sein und kann auch 9, 10, 12, 13 oder mehr Ritzel umfassen. Im dargestellten Beipiel soll die Zähhezahldifferenz zwischen dem kleinsten Ritzel 14 und dem größten Ritzel 18 32 Zähne betragen, wenngleich der Zähnezahlunterschied zwischen dem kleinsten Ritzel 14 und dem größten Ritzel 18 auch kleiner oder größer als 32 sein kann.

Die Anordnung 12 an koaxialen hinteren Ritzeln ist vorzugsweise an einem Hinterrad eines Fahrrads zur Übertragung von Antriebsdrehmoment an dieses vorgesehen.

Weiter umfasst die Anordnung 10 ein vorderes Kettenrad 20, welches um eine zur Zeichenebene der Fig. 1 orthogonale Kettenradachse K drehbar an einem Tretlager eines Fahrrads vorgesehen sein kann, wobei eine Einleitung eines Drehmoments durch drehfest mit dem Kettenrad 20 verbundene Kurbeln (in den Figuren nicht dargestellt) in das Kettenrad in an sich bekannter Weise erfolgen kann.

Eine Antriebskette 22, welche beispielsweise in an sich bekannter Weise eine Rollenkette mit in Kettenverlaufsrichtung abwechselnden Innen- und Außenlaschen zu beiden Seiten ausgebildet sein kann, ist in Fig. 1 mit einem aktiven Ritzel 16 der Anordnung 12 und mit dem vorderen Kettenrad 20 in kämmendem Eingriff.

Die Antriebskette 22 durchläuft auf ihrem Weg von dem Kettenrad 20 zur Ritzelanordnung 12 eine hintere Kettenführung 24, welche in vorteilhafter Weise mit einem Anbringungsteil 26 an einem Ritzelachsenbauteil 28 durch eine an sich bekannte Befestigungseinrichtung 30 befestigt sein kann. Dadurch wird keine gesonderte Halterung für das Anbringungsbauteil 26 der hinteren Kettenführung 24 an dem in den Figuren nicht dargestellten Fahrrad benötigt. Gleichwohl kann die Befestigung der hinteren Kettenführung 24 auch am Fahrrad selbst, etwa an einer hinteren Gabel oder dergleichen erfolgen.

Die hintere Kettenführung 24 weist ein relativ zum Anbringungsteil 26 bewegliches Bewegungsteil 32 auf, welches über ein Parallelogramm-Viergelenk 34, genauer über zwei Parallelogramm-Lenker 36 und 38 an dem Anbringungsteil angelenkt ist.

An dem Bewegungsteil 32 ist eine Spanneinrichtung 40 um eine SpannSchwenkachse S schwenkbar angelenkt. Bevorzugt ist die Spanneinrichtung 40 mit einem um die Spann-Schwenkachse S wirkenden Kettenspannmoment KSM belastet, welches in der im Ausführungsbeispiel gezeigten Konfiguration im Antriebsdrehsinn der Kette 22 gemäß Pfeil A um die Spann-Schwenkachse S wirkt. Somit ist die Antriebskette 22 unabhängig von dem jeweils gewählten aktiven Ritzel gespannt.

In dem diskutierten Ausführungsbeispiel ist das vordere Kettenrad 20 vorteilhafterweise das einzige Kettenrad, so dass jegliche Änderung einer Über- bzw. Untersetzung der in an sich bekannter Weise in das Kettenrad 20 eingeleiteten Antriebskraft allein durch Auswahl eines Ritzels aus der Ritzelanordnung 12 als aktives, mit der Antriebskette 22 kämmendes Ritzel erfolgen kann.

Die Spanneinrichtung 40 bildet zusammen mit dem Bewegungsteil 32 einen Spann-Umwerfer, welcher durch die vom Parallelogramm-Viergelenk 34 bereitgestellte Relativbewegung des Bewegungsteils 32 relativ zur Ritzelanordnung 12 im Wesentlichen parallel zur Ritzelachse R bewegt werden kann, um die Antriebskette 22 in Eingriff mit einem gewünschten Ritzel der Ritzelanordnung 12 in kämmenden Eingriff zu bringen.

Die Gelenkachsen G1 bis G4 des Parallelogramm-Viergelenks 34 verlaufen im Wesentlichen orthogonal zur Ritzelachse R und damit im fertig montierten Zustand vorzugsweise parallel zu einer Längsmittelebene eines die hier diskutierte Antriebsanordnung 10 tragenden Fahrrads.

Bevorzugt sind die Gelenkachsen G1 bis G4 derart angeordnet, dass es wenigstens eine Gelenkachse gibt, vorzugsweise dass alle Gelenkachsen G1 bis G4 bei Betrachtung der Antriebsanordnung 10 in einer Projektion längs der Ritzelachse derart orientiert sind, dass die Ritzelachse R auf einer Seite der wenigstens einen Gelenkachse G1 bis G4 gelegen ist und die Spann-Schwenkachse S sowie die Kettenradachse K auf der jeweils anderen Seite der wenigstens einen Gelenkachse G1 bis G4 gelegen ist.

Die Spanneinrichtung 40 weist eine erste Kettenführungsrolle 42 und eine zweite Kettenführungsrolle 44 auf, von welchen sich die erste Kettenführungsrolle 42 in dem dargestellten Ausführungsbeispiel außerhalb der von der Antriebskette 22 eingefassten Fläche 46 und die zweite Ketteriführungsrolle 44 innerhalb derselben Fläche 46 befindet. Beide Kettenführungsrollen 42 und 44 sind mit der Antriebskette 22 in Anlage-, vorzugsweise Kämmeingriff.

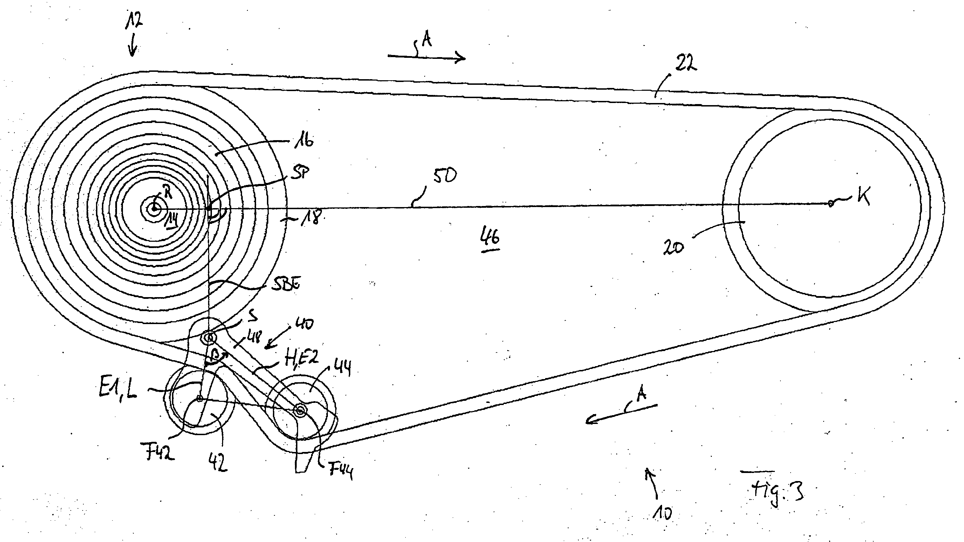

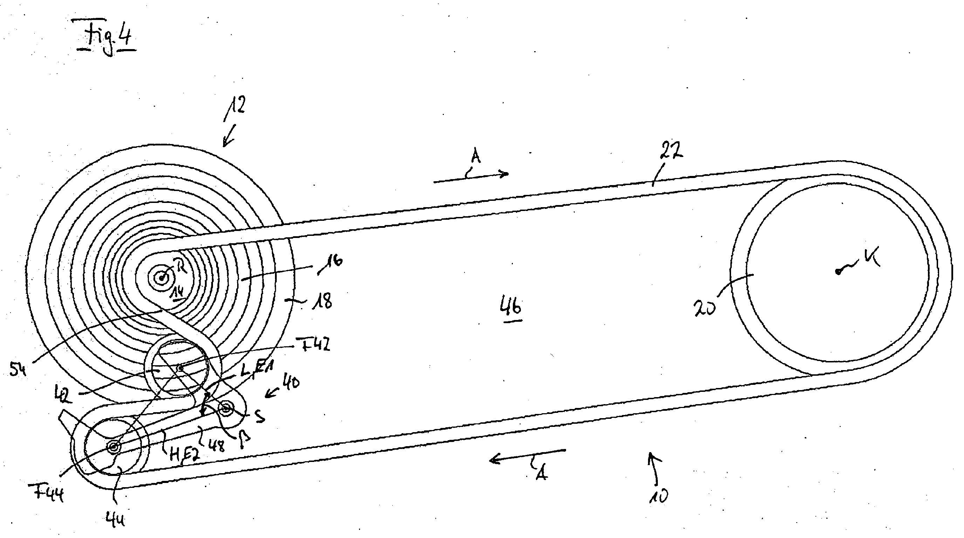

Da die erste Kettenführungsrolle 42 diejenige Kettenführungsrolle ist, von welcher die Antriebskette 22 bei Bewegung in der Antriebsdrehrichtung A als letztes abläuft, bevor sie das jeweils gewählte aktive Ritzel (in Fig. 1 Ritzel 16, in Fig. 3 Ritzel 18 und in Fig. 4 Ritzel 14) erreicht, ist die erste Kettenführungsrolle 42 nachfolgend als ritzelnähere Kettenführungsrolle bezeichnet und ist die zweite Kettenführungsrolle 44 nachfolgend als ritzelfernere Kettenführungsrolle bezeichnet.

Die beiden Kettenführungsrollen 42 und 44 sind jeweils um Kettenführungsrollenachsen F42 bzw. F44 drehbar, welche Kettenführungsrollenachsen F42 und F44 zueinander und zur Spann-Schwenkachse S parallel und von der letztgenannten Spann-Schwenkachse S verschieden sind.

Der Übersichtlichkeit halber sei auf die Fig. 3 und 4 verwiesen, um die geometrischen Verhältnisse an der Spanneinrichtung 40 näher zu beschreiben:

Die Kettenführungsrollen 42 und 44 sind bevorzugt durch ein gemeinsames Käfigbauteil 48 miteinander verbunden und drehbar an diesem aufgenommen. Das Käfigbauteil 48 kann dann wiederum an dem Bewegungsteil 32 um die Spann-Schwenkachse S schwenkbar und mit der oben bezeichneten Vorspannung befestigt sein, so dass mit einer einzigen Befestigung vorteilhaft beide Kettenführungsrollen 42 und 44 relativ zum Bewegungsteil 32 an der hinteren Kettenführung 24 festgelegt werden.

Die Abstände der Kettenführungsrollenachsen F42 und F44 zueinander und zur Spann-Schwenkachse S sind auf diese Weise einfach konstant zu halten.

Beispielweise weist die Kettenführungsrollenachse F42 der ritzelnäheren Kettenführungsrolle 42 von der Spann-Schwenkachse S einen Abstand L auf, welcher kürzer ist als der Abstand H zwischen der Kettenführungsrollenachse F44 der ritzelferneren Kettenführungsrolle 44 und der Spann-Schwenkachse S.

Dadurch kann mit der ritzelnäheren Kettenführungsrolle 42 eine ausreichende radiale Zustellbewegung zu den Ritzeln hin und von diesen weg bei der Auswahl eines jeden der hier beispielhaft gezeigten 11 Ritzel als aktives Ritzel erreicht werden und gleichzeitig kann in der Strecke zwischen der ritzelnäheren Kettenführungsrolle 42 und der ritzelferneren Kettenführungsrolle 44 ausreichend Kettenlänge gespeichert oder aufgenommen werden, wenn das aktive Kettenritzel einen sehr kleinen Durchmesser aufweist, etwa wenn die Antriebskette 22 mit dem Ritzel 14 in Eingriff ist und die Eingriffslänge der Antriebsweile 22 mit diesem Ritzel 14 sehr kurz ist, wie man am Beispiel des Betriebszustands der Antriebsanordnung 10 in Fig. 4 erkennt.

Die zueinander parallelen Achsen: Spann-Schwenkachse S und Kettenführungsrollenachse F42, spannen eine erste, zur Zeichenebene der Fig. 1, 3, 4 und 5 orthogonale Ebene E1 auf, deren Projektion in den Fig. 3 bis 5 der vorliegenden Anmeldung mit dem Abstandsmaß L zusammenfällt.

Ebenso spannen die im Wesentlichen parallelen Achsen: Spann-Schwenkachse S und Kettenführungsrollenachse F44, eine zweite Ebene E2 auf, welche ebenfalls orthogonal zu den Zeichenebenen der Fig. 1 und 3 bis 5 verläuft und daher deren Projektion in den genannten Figuren mit dem Abstandsmaß H zusammenhält.

Die so gebildeten Ebenen E1 und E2 schließen einen Winkel β ein, welcher einen Wert in einem Bereich von 50° bis 85°, vorzugsweise in einem Bereich von 55° bis 75° und besonders bevorzugt von 55° bis 65° aufweist. In dem in den vorliegenden Figuren dargestellten Beispiel weist der Winkel β einen Wert von etwa 60° auf.

Durch diese Anwendung eines spitzen Winkels zwischen den Verbindungsebenen E1 und E2 kann erreicht werden, dass die Länge des Abstands H groß gemacht werden kann, um entsprechend größere Kettenlängen in der Spanneinrichtung 40 aufzunehmen (siehe Fig. 4), ohne dass ein die Anordnung 10 tragendes Fahrrad unzumutbar an Bodenfreiheit einbüßt oder eine Kollision von Abschnitten der umlaufenden Antriebskette 22 im Bereich der Spanneinrichtung 40 zu befürchten wäre.

Als besonders vorteilhaft hat sich ein Längenverhältnis der Abstände H zu L im Bereich von 1,8 bis 2,0 erwiesen. Im hier gezeigten Ausführungsbeispiel ist der Abstand H der Kettenführungsrollenachse F44 von der Spann-Schwenkachse S um etwa das 1,93-fache größer als der Abstand L der Kettenführungsrollenachse F42 von der Spann-Schwenkachse S.

In Fig. 3 ist zur weiteren Verdeutlichung der Anördnungsbeziehung der hinteren Kettenführung 24 zur Anordnung 12 der hinteren Ritzel eine Spann-Bezugsebene SBE eingezeichnet, welche die Spann-Schwenkachse S enthält und dementsprechend orthogonal zur Zeichenebene der Fig. 3 orientiert ist.

Diese Spann-Bezugsebene SBE ist weiter einer Lotebene auf eine Abstandsgerade 50, welche die beiden Achsen: Ritzelachse R und Kettenradachse K, miteinander verbindet.

Wie in Fig. 3 zu erkennen ist, schneidet die Spänn-Bezugsebene die Abstandsgerade vorzugsweise in einem Bereich zwischen den die Abstandsgerade 50 definierenden Achsen: Kettenradachse K und Ritzelachse R. Besonders bevorzugt ist der Abstand des Schnittpunks SP, den die Spann-Bezugsebene SBE mit der Abstandsgeraden 50 bildet, von der Ritzelachse R nicht größer als 10 % und nicht kleiner als 8 % des Abstands der Ritzelachse R von der Kettenradachse K. In diesem Falle ist die Spann-Schwenkachse S in einem besonders vorteilhaften Bereich angeordnet, um selbst an Ritzelanordnungen 12 mit 11 oder mehr Ritzeln die Antriebskette 22 auf jedes einzelne Ritzel auflegen zu können.

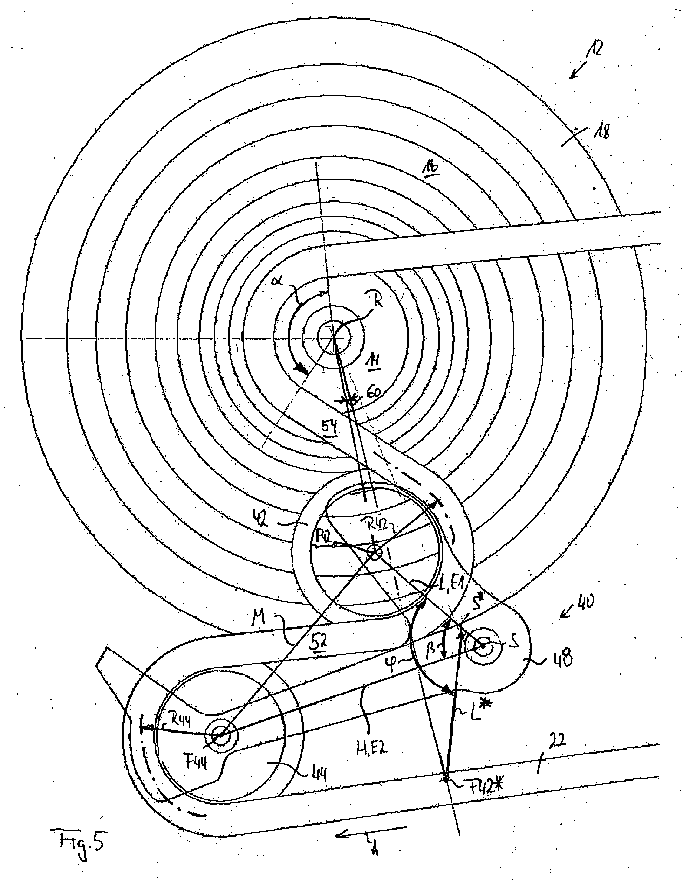

Wie weiter in Fig. 5 zu erkennen ist, beträgt in dem vorteilhaften Ausführungsbeispiel der Abstand M zwischen den Kettenführungsrollenachsen F42 und F44 etwa das 1,5-fache der Summe des Fußkreisradius R42 der ritzelnäheren Kettenführungsrolle 42 und des Fußkreisradius R 44 der ritzelferneren Kettenführungsrolle 44. Damit kann sichergestellt werden, dass zwischen den Kettenführungsrollen 42 und 44 ein ausreichend langer Abschnitt 52 der Antriebskette 22 vorhanden ist, um eine möglichst exakte Kettenführung durch die hintere Kettenführung 42 bereitzustellen.

Weiter ist in Fig. 5 die Abstandsgerade L zwischen der Spann-Schwenkachse S und der Kettenführungsrollenachse F42 zusätzlich in ihrer Stellung gezeigt, welche sie einnimmt, wenn das durchmessergrößte Ritzel 18 als aktives Ritzel ausgewählt ist (vgl. mit Fig. 3). Die Orientierung des Abstands L in der Stellung bei größtem aktiven Ritzel ist in Fig. 5 mit L* bezeichnet.

Diese reicht von einer Stelle S*, welche der Lage der Spann-Schwenkachse S bei gewähltem durchmessergrößten aktiven Ritzel 18 anzeigt, bis zu einer Stelle F42*, welche der Lage der Kettenführungsrollenachse F42 bei bewähltem durchmessergrößten aktiven Kettenritzel 18 entspricht.

Unter Vernachlässigung der Verlagerung der Spann-Schwenkachse S bei einer Verstellung der hinteren Kettenführung 24 zwischen ihren beiden Extremstellungen, von welchen die mit durchmesserkleinstem aktiven Ritzel in Fig. 5 dargestellt ist und von welchem die in Fig. 3 gezeigte mit durchmessergrößtem aktiven Ritzel in Fig. 5 wenigstens angedeutet ist, verschwenkt die Spanneinrichtung 40 bei dieser Verlagerung um den Winkel ϕ, welcher im dargestellten Beispiel vorzugsweise etwa 125° beträgt. Dadurch kann erreicht werden, dass selbst bei nicht allzu ausladender Länge L zwischen der Spann-Schwenkachse S und der Kettenführungsrollenachse F42 der ritzelnäheren Kettenführungsrolle 42 ein ausreichend großer radialer Verstellweg (bezogen auf die Ritzelachse R) durch den hinteren Spann-Umwerfer realisierbar ist, so dass die Antriebskette 22 zwischen einer Vielzahl von Ritzeln oder/und zwischen Ritzeln mit einer sehr großen, also 25 übersteigenden, Zähnezahldifferenz zwischen größtem und kleinstem Ritzel schaltbar ist. Dabei kann dann ein möglichst großer bezogen auf die Ritzelachse R radialer Zustellweg der die Antriebskette 22 zur Ritzelanordnung 12 hin abgebenden ritzelnäheren Kettenführungsrolle 42 realisiert werden, wenn die Länge der Antriebskette 22 derart bemessen und die hintere Kettenführung 24 derart angeordnet ist, dass die Kettenführungsrollenachse F42 der rizelnäheren Kettenführungsrolle 42 in den beiden Extremstellungen der Spanneinrichtung 40, also bei einmal durchmesserkleinstem aktiven Ritzel 14 und einmal durchmessergrößten aktiven Ritzel 18, bei Betrachtung der Antriebsanordnung 10 längs der Ritzelachse R in einem von der Ritzelachse R ausgehenden und in einer zur Ritzelachse R orthogonalen Ebene betrachteten Sektor gelegen sind, dessen Winkelausdehnung vorzugsweise kleiner als 7,5°, besonders bevorzugt kleiner als 5° und im dargestellten Beispiel sogar kleiner als 4° ist.

Mit der hier beschriebenen Anordnung kann ein freier Kettenabschnitt 54 zwischen der ritzelnäheren Kettenführungsrolle 42 und dem aktiven Ritzel (in Fig. 5: Ritzel 14) unabhängig vom jeweils gewählten aktiven Ritzel etwa konstant gehalten werden. Gleichzeitig ist die Länge des freien Kettenabschnitts 54 mit den hier vorgestellten Verhältnissen nicht so kurz, dass die Antriebskette 22 nicht mehr von einem aktiven Ritzel auf das nächstgrößere inaktive Ritzel schaltbar ist und nicht so lang, dass sich bei einer Bewegung des Spann-Umwerfers der hinteren Kettenführung 24 der Kettenabschnitt 54 lediglich verformt, es jedoch nicht zu einem Umlegen der Kette 22 auf das nächstgrößere Ritzel kommt.

Gleichzeitig kann erreicht werden, dass die Antriebskette 22 längs eines winkelbereichs α von 110° bis 180°, vorzugsweise von 120° bis 160°, in kämmenden Eingriff ist, so dass ausreichend Antriebskraft über die Antriebskette 22 auf das mit der Ritzelanordnung 22 drehmomentübertragend verbundene Fahrradhinterrad übertragbar ist.

## Patentansprüche

1. Antriebsanordnung für ein Fahrrad, umfassend ein um eine Kettenradachse (K) drehbares vorderes Kettenrad (20), eine Mehrzahl (12) von koaxialen hinteren Kettenritzeln (14, 16, 18) unterschiedlichen Durchmessers und unterschiedlicher Zähnezahl, eine um die Kettenritzel (14, 16, 18) und das vordere Kettenrad (20) umlaufende Antriebskette (22), welche mit einem ausgewählten aktiven Ritzel aus der Mehrzahl von koaxialen hinteren Kettenritzeln (14, 16, 18) und mit dem vorderen Kettenrad (20) in kämmendem Eingriff ist, und eine hintere Kettenführung (24) mit einem Spann-Umwerfer (32, 40), welcher von der Antriebskette (22) durchlaufen ist, wobei der Spann-Umwerfer (32, 40) in Richtung der gemeinsamen Ritzelachse (R) der hinteren Kettenritzel (14, 16, 18) relativ zu diesen beweglich ist, um durch diese axiale Relativbewegung das aktive Ritzel aus der Mehrzahl von hinteren Ritzeln (14, 16, 18) auszuwählen, wobei der Spann-Umwerfer (32, 40) eine Spanneinrichtung (40) mit zwei Kettenführungsrollen (42, 44) mit im Wesentlichen sowohl zueinander als auch zur gemeinsamen Ritzelachse (R) parallelen Kettenführungsrollenachsen (F42, F44) aufweist, wobei die hintere Kettenführung (24) einen bezüglich der Ritzelachse (R) ortsfesten Anbringungsteil (26) und einen an diesem durch ein Parallelogramm-Viergelenk (34) relativbeweglich angelenkten Bewegungsteil (32) aufweist, wobei die Spanneinrichtung (40) am Bewegungsteil (32) um eine von den Kettenführungsrollenachsen (F42, F44) verschiedene, zu den Kettenführungsrollenachsen (F42, F44) parallele Spann-Schwenkachse (S) schwenkbar angeordnet und mit einem um die Spann-Schwenkachse (S) wirkenden Kettensparinmoment (KS11) vorgespannt ist, wobei die vier Gelenkachsen (G1, G2, G3, G4) des Parallelogramm-Viergelenks (34) unabhängig von der gewählten Relativstellung des Spann-Umwerfers (32, 40) relativ zur Mehrzahl (12) von hinteren Ritzeln (14, 16, 18) orthogonal zu deren gemeinsamer Ritzelachse (R) ausgerichtet sind,
wobei der konstante erste Abstand (L) der ritzelnäheren Kettenführungsrollenachse (F42) von der Spann-Schwenkachse (S) kürzer ist als der konstante zweite Abstand (H) der ritzelferneren Kettenführungsrollenachse (F44) von der Spann-Schwenkachse (S),
**dadurch gekennzeichnet, dass** die Differenz an Zähneanzahl zwischen dem zahnreichsten hinteren Ritzel (18) und dem zahnärmsten hinteren Ritzel (14) mehr als 25 beträgt und eine erste Verbindungsebene (E1), welche die ritzelnähere kettenführungsrollenachse (F42) und die Spann-Schwenkachse (S) enthält, mit einer zweiten Verbindungsebene (E2), welche die ritzelfernere Kettenführungsrollenachse (F44) und die Spann-Schwenkachse (S) enthält, einen Winkel von 55° bis 60° einschließt.

2. Antriebsanordnung nach Anspruch 1,
**dadurch gekennzeichnet, dass** der zweite Abstand (H) der ritzelferneren Kettenführungsrollenachse (F44) von der Spann-Schwenkachse (S) weniger als das 2,5-fache, bevorzugt weniger als 2,3-fache, besonders bevorzugt weniger als das doppelte, jedoch mehr als das 1,3-fache, bevorzugt mehr als das 1,6-fache, besonders bevorzugt mehr als das 1,8-fache des ersten Abstands (L) der ritzelnäheren Kettenführungsrollenachse (F42) von der Spann-Schwenkachse (S) beträgt.

3. Antriebsanordnung nach Anspruch 1 oder 2,
**dadurch gekennzeichnet, dass** eine Spann-Bezugsebene (SBE), welche die Spann-Schwenkachse (S) enthält und zu einer Abstandsgeraden (50), die die Ritzelachse (R) und die Kettenradachse (K) verbindet, orthogonal ist, die Abstandsgerade (50) in einem Bereich zwischen der Ritzelachse (R) und der Kettenradachse (K) schneidet.

4. Antriebsanordnung nach Anspruch 3,
**dadurch gekennzeichnet, dass** der Schnittpunkt (SP) der Abstandsgerade (50) mit der Spann-Bezugsebene (SBE) von der Ritzelachse (R) nicht mehr als 16 %, bevorzugt nicht mehr als 12 %, besonders bevorzugt nicht mehr als 10 % und nicht weniger als 6 %, bevorzugt nicht mehr als 7 % und besonders bevorzugt nicht mehr als 8 % des Abstands zwischen der Ritzelachse (R) und der Kettenradachse (K) entfernt ist.

5. Antriebsanordnung nach einem der vorhergehenden Ansprüche,
**dadurch gekennzeichnet, dass**, bei Betrachtung der Antriebsanordnung (10) in Richtung der gemeinsamen Ritzelachse (R), wenigstens eine Gelenkachse (G1, G2, G3, G4), vorzugsweise alle Gelenkachsen (G1, G2, G3, G4), des Parallelogramm-Viergelenks (34) zwischen der Ritzelachse (R) einerseits und sowohl der Spann-Schwenkachse (S) als auch der Kettenradachse (K) andererseits verläuft.

6. Antriebsanordnung nach einem der vorhergehenden Ansprüche,
**dadurch gekennzeichnet, dass** der Abstand der Kettenführungsrollenachsen (F42, F44) voneinander größer gewählt ist als das 1,5-flache der Summe der Fußkreisradien (R42, R44) der beiden Kettenführungsrollen (42, 44), bevorzugt mehr als das 1,8-fache der Summe der Fußkreisradien (R42, R44) beiden Kettenführungsrollen (42, 44) beträgt.

7. Antriebsanordnung nach einem der vorhergehenden Ansprüche,
**dadurch gekennzeichnet, dass** die Kettenlänge und die Abstände der Kettenführungsrollenachsen (F42, F44) von der Spann-Schwenkachse (S) derart gewählt sind, dass die Spanneinrichtung (40) zwischen ihren Extremstellungen, in welchen die jeweils axial ganz außen liegenden Ritzel als aktive Ritzel ausgewählt sind, um 100° bis 140°, bevorzugt um 110° bis 130°, besonders bevorzugt um 120° bis 125° verschwenkt.

8. Antriebsanordnung nach einem der vorhergehenden Ansprüche,
**dadurch gekennzeichnet, dass** die Länge der Parallelogramm-Lenker (36, 38) des Parallelogramm-Viergelenks (34) mehr als die Hälfte der freien Kettenlänge (54) zwischen der ritzelnäheren Kettenführungsrolle (42) und dem jeweils aktiven Ritzel und weniger als diese freie Kettenlänge (54) beträgt.

9. Antriebsanordnung nach einem der vorhergehenden Ansprüche,
**dadurch gekennzeichnet, dass** sie nur genau ein vorderes Kettenrad (20) umfasst.

10. Antriebsanordnung nach einem der vorhergehenden Ansprüche,
**dadurch gekennzeichnet, dass** sie mehr als neun, vorzugsweise mehr als zehn, besonders bevorzugt genau elf koaxiale hintere Ritzel (14, 16, 18) umfasst.

11. Antriebsanordnung nach einem der vorhergehenden Ansprüche,
**dadurch gekennzeichnet, dass** die Differenz an Zähneanzahl zwischen dem zahnreichsten hinteren Ritzel (18) und dem zahnärmsten hinteren Ritzel (14) mehr als 28, besonders bevorzugt mehr als 30, höchst bevorzugt genau 32 beträgt.

## Claims

1. Drive arrangement for a bicycle, comprising a front chain wheel (20) which can be rotated about a chain wheel axle (K), a plurality (12) of coaxially rear sprockets (14, 16, 18) with different diameters and different numbers of teeth, a drive chain (22) passing around said sprockets (14, 16, 18) and the front chain wheel (20), which is in meshing engagement with a selected active sprocket out of the plurality of coaxially rear sprockets (14, 16, 18) and with the front chain wheel (20), and a rear chain guide (24) with a derailleur (32, 40) through which the drive chain (22) passes, said derailleur (32, 40) being movable in the direction of the common sprocket axle (R) of the rear sprockets (14, 16, 18) in relation to the latter, for selecting by this axial relative movement the active sprocket out of the plurality of rear sprockets (14, 16, 18), said derailleur (32, 40) comprising a tensioning device (40) with two chain guide rollers (42, 44) with chain guide roller axles (F42, F44) which are substantially parallel to each other as well as to the common sprocket axle (R), said rear chain guide (24) comprising a mounting part (26) fixed in relation to the sprocket axle (R) and a moving part (32) hinged to the latter by a parallelogram four-joint link (34) in a way allowing relative movement, said tensioning device (40) being arranged at the moving part (32) so that it can pivot about a tensioning pivot axle (S) which is different from the chain guide roller axles (F42, F44) and parallel to the chain guide roller axles (F42, F44) and being biased with a chain tensioning torque (KS11) acting about the tensioning pivot axle (S), wherein the four joint axles (G1, G2, G3, G4) of the parallelogram four-joint link (34) are arranged orthogonally to the common sprocket axle (R) in relation to the plurality (12) of rear sprockets (14, 16, 18) independently of the selected relative position of said derailleur (32, 40), wherein the constant first distance (L) of the chain guide roller axle which is nearer to the sprocket (F42) to the tensioning pivot axle (S) is shorter than the constant second distance (H) of the chain guide roller axle which is further away from the sprocket (F44) to the tensioning pivot axle (S),
**characterized in that** the difference between the number of teeth of the rear sprocket with the highest number of teeth (18) and the rear sprocket with the lowest number of teeth (14) is more than 25 and **in that** a first connection plane (E1) containing the chain guide roller axle which is nearer to the sprocket (F42) and the tensioning pivot axle (S) encloses an angle of 55° to 60° with a second connection plane (E2) containing the chain guide roller axle which is further away from the sprocket (F44) and the tensioning pivot axle (S).

2. Drive arrangement according to claim 1,
**characterized by** the second distance (H) of the roller axle which is further away from the sprocket (F44) to the tensioning pivot axle (S) being less than the 2.5-fold, preferably less than the 2.3-fold, particularly preferred less than double but more than the 1.3-fold, preferably more than the 1.6-fold, particularly preferred more than the 1.8-fold of the first distance (L) of the chain guide roller axle which is nearer to the sprocket (F42) to said tensioning pivot axle (S).

3. Drive arrangement according to claim 1 or 2,
**characterized by** a tensioning reference plane (SBE) which contains the tensioning pivot axle (S) and which is orthogonal to a distance line (50) connecting the sprocket axle (R) and the chain wheel axle (K) intersecting said distance line (50) in an area between said sprocket axle (R) and said chain wheel axle (K).

4. Drive arrangement according to claim 3,
**characterized in that** the point of intersection (SP) of the distance line (50) with said tensioning reference plane (SBE) has a distance to the sprocket axle (R) of not more than 16%, preferably not more than 12%, particularly preferred of not more than 10% and not less than 6%, preferably not more than 7% and particularly preferred not more than 8% of the distance between the sprocket axle (R) and the chain wheel axle (K).

5. Drive arrangement according to one of the preceding claims,
**characterized in that** when the drive arrangement (10) is viewed in the direction of the common sprocket axle (R), at least one joint axle (G1, G2, G3, G4), preferably all joint axles (G1, G2, G3, G4) of the parallelogram four-joint link (34) pass between the sprocket axle (R) on the one hand and the tensioning pivot axle (S) as well as the chain wheel axle (K) on the other hand.

6. Drive arrangement according to one of the preceding claims,
**characterized by** the distance between the chain guide roller axles (F42, F44) being chosen larger than the 1.5-fold of the sum of the root circle radii (R42, R44) of the two chain guide rollers (42, 44), preferably larger than the 1.8-fold of the sum of the root circle radii (R42, R44) of the two chain guide rollers (42, 44).

7. Drive arrangement according to one of the preceding claims,
**characterized by** the chain length and the distances of the chain guide roller axles (F42, F44) to the tensioning pivot axle (S) being selected so that the tensioning device (40) pivots by 100° to 140°, preferably by 110° to 130°, particularly preferred by 120° to 125° between its extreme positions, in which the sprockets axially to the outside are selected as active sprockets.

8. Drive arrangement according to one of the preceding claims,
**characterized by** the length of the parallelogram guiding element (36, 38) of the parallelogram four-joint link (34) having more than half of the free chain length (54) between the chain guide roller nearer to the sprocket (42) and the active sprocket and less than said free chain length (54).

9. Drive arrangement according to one of the preceding claims,
**characterized in that** it comprises exactly one front chain wheel (20).

10. Drive arrangement according to one of the preceding claims,
**characterized in that** it comprises more than nine, preferably more than ten, particularly preferred exactly eleven coaxial rear sprockets (14, 16, 18).

11. Drive arrangement according to one of the preceding claims,
**characterized by** the difference between the number of teeth of the sprocket with the highest number of teeth (18) and the rear sprocket with the lowest number of teeth (14) being more than 28, particularly preferred more than 30, most preferred exactly 32.

## Revendications

1. Système d'entraînement pour un vélo, comprenant une roue à chaîne antérieure (20) qui peut tourner autour d'un axe de roue à chaîne (K), une pluralité (12) de pignons à chaîne disposés coaxialement arrières (14, 16, 18) avec des diamètres différents et des nombres différents de dents, une chaîne d'entraînement (22) passant autour des pignons à chaîne (14, 16, 18) et la roue à chaîne antérieure (20) qui est en engagement d'engrènement avec un pignon actif sélecté parmi la pluralité de pignons à chaîne disposés coaxialement arrières (14, 16, 18) et avec la roue à chaîne antérieure (20) et un guide-chaîne arrière (24) avec un dérailleur (32, 40) à travers duquel la chaîne d'entraînement (22) passe, le dérailleur de tension (32, 40) étant mobile dans le sens de l'axe commun de pignon (R) des pignons arrières (14, 16, 18) par rapport à ces derniers, pour sélecter par ce mouvement relatif axial parmi la pluralité de pignons arrières (14, 16, 18) le pignon actif, le dérailleur (32, 40) comprenant un dispositif de tension (40) avec deux rouleaux de guidage de chaîne (42, 44) avec des axes de rouleaux de guidage de chaîne (F42, F44) essentiellement parallèles les uns par rapport aux autres tout comme à l'axe commun de pignon (R), le guidage de chaîne arrière (24) comprenant une partie de montage (26) fixe par rapport à l'axe de pignon (R) et une partie de mouvement (32) fixée de manière articulée à ce dernier pour un mouvement relatif par un parallélogramme à quatre articulations (34), le dispositif de tension (40) étant arrangé à la partie de mouvement (32) de manière pivotante autour d'un axe de tension et de pivotement (S) différent des axes de rouleaux de guidage de chaîne (F42, F44) et parallèle aux axes de rouleaux de guidage de chaîne (F42, F44) et étant précontraint avec un couple de serrage de chaîne (KS11) agissant autour de l'axe de tension et de pivotement (S), les quatre axes d'articulation (G1, G2, G3, G4) du parallélogramme à quatre articulations (34) étant orientés de manière orthogonale à l'axe commun de pignon (R) par rapport à la pluralité (12) de pignons arrières (14, 16, 18) indépendamment de la position relative choisie du dérailleur (32, 40), la première distance constante (L) de l'axe de rouleaux de guidage de chaîne plus proche des pignons (F42) par rapport à l'axe de tension et de pivotement (S) étant plus petite que la deuxième distance constante (H) de l'axe de rouleaux de guidage de chaîne plus éloigné des pignons (F44) par rapport à l'axe de tension et de pivotement (S),
**caractérisé par** la différence du nombre de dents entre le pignon arrière avec le plus grand nombre de dents (18) et le pignon arrière avec le plus petit nombre de dents (14) étant plus grande que 25 et par un premier plan de connexion (E1) comprenant l'axe de rouleaux de guidage de chaîne plus proche des pignons (F42) et l'axe de tension et de pivotement (S) formant un angle de 55° à 60° avec une deuxième plan de connexion (E2) comprenant l'axe de rouleaux de guidage de chaîne plus éloigné des pignons (F44) et l'axe de tension et de pivotement (S).

2. Système d'entraînement selon la revendication 1,
**caractérisé par** la deuxième distance (H) de l'axe de rouleaux de guidage de chaîne plus éloigné des pignons (F44) par rapport à l'axe de tension et de pivotement (S) étant moins que 2,5 fois, de préférence moins que 2,3 fois, de manière particulièrement préféré moins que le double, mais plus que 1,3 fois, de préférence plus que 1,6 fois et de manière particulièrement préféré plus que 1,8 fois la première distance (L) de l'axe de rouleaux de guidage de chaîne plus proche des pignons (F42) par rapport à l'axe de tension et de pivotement (S).

3. Système d'entraînement selon la revendication 1 ou 2,
**caractérisé par** un plan de tension de référence (SBE) qui comprend l'axe de tension et de pivotement (S) et qui est orthogonal à une ligne de distance (50) liant l'axe de pignon (R) à l'axe de roue à chaîne (K) coupant la ligne de distance (50) dans une région entre l'axe de pignon (R) et l'axe de roue à chaîne (K).

4. Système d'entraînement selon la revendication 3,
**caractérisé par** l'intersection (SP) de la ligne de distance (50) avec le plan de tension de référence (SBE) ayant une distance de l'axe de pignon (R) qui correspond à pas plus de 16%, de préférence pas plus de 12% et de manière particulièrement préférée pas plus de 10% et pas moins de 6%, de préférence pas plus de 7% et de manière particulièrement préférée pas plus de 8% de la distance entre l'axe de pignon (R) et l'axe de roue à chaîne (K).

5. Système d'entraînement selon une des revendications précédentes,
**caractérisé en ce que** lorsqu'on observe le système d'entraînement (10) dans le sens de l'axe commun de pignon (R), au moins un axe d'articulation (G1, G2, G3, G4), de préférence tous les axes d'articulation (G1, G2, G3, G4) du parallélogramme à quatre articulations (34) passent entre l'axe de pignon (R) d'un côté et l'axe de tension et de pivotement (S) ainsi que l'axe de roue à chaîne (K) de l'autre côté.

6. Système d'entraînement selon une des revendications précédentes,
**caractérisé par** la distance des axes de rouleaux de guidage de chaîne (F42, F44) étant sélectée plus grande que 1,5 fois la somme des rayons du cercle de pied (R42, R44) des deux rouleaux de guidage de chaîne (42, 44), de préférence plus grande que 1,8 fois la somme des rayons du cercle de pied (R42, R44) des deux rouleaux de guidage de chaîne (42, 44).

7. Système d'entraînement selon une des revendications précédentes,
**caractérisé par** la longueur de la chaîne et les distances des axes de rouleaux de guidage de chaîne (F42, F44) de l'axe de tension et de pivotement (S) étant sélectées de sorte que le dispositif de tension (40) pivote entre ses positions extrêmes, où les pignons axialement les plus externes sont sélectés comme pignons actifs, de 100° à 140°, de préférence de 110° à 130°, de manière particulièrement préférée de 120° à 125°.

8. Système d'entraînement selon une des revendications précédentes,
**caractérisé par** la longueur des guides de parallélogramme (36, 38) du parallélogramme à quatre articulations (34) correspondant à plus de la moitié de la longueur libre de la chaîne (54) entre le rouleau de guidage de chaîne plus proche des pignons (42) et le pignon actif et ne dépassant pas la longueur libre de la chaîne (54).

9. Système d'entraînement selon une des revendications précédentes,
**caractérisé en ce qu'**il comprend exactement une roue à chaîne antérieure (20).

10. Système d'entraînement selon une des revendications précédentes,
**caractérisé en ce qu'**il comprend plus de neuf, de préférence plus de dix, de manière particulièrement préférée exactement onze pignons arrières (14, 16, 18).

11. Système d'entraînement selon une des revendications précédentes,
**caractérisé par** la différence du nombre de dents entre le pignon arrière avec le plus grand nombre de dents (18) et le pignon arrière avec le plus petit nombre de dents (14) étant plus grande que 28, de manière particulièrement préférée plus grande que 30, de manière la plus préférée exactement 32.
